# EUROPEAN PATENT APPLICATION

(11) **EP 1 755 079 A1**
(43) Date of publication of application: **21.02.2007**
(21) Application number: 06076365.3
(22) Date of filing: 05.07.2006
(51) Int. Cl.: G06Q 30/00

(54) **System and method for distributing media content**

(30) Priority: 01.08.2005 US 194186
(71) Applicant: Delphi Technologies, Inc., Troy, Michigan 48007 (US)
(72) Inventor: Farrow, Daniel W., Oro Valley, AZ 85737 (US)
(74) Representative: Denton, Michael John

(57) **Abstract**

A system (20) and method for distributing media content. Transactions for the purchase of content units (22) can be consummated while users (36) sample the content through a player device (34). For example, a listener of satellite radio could decide to purchase a song currently being played on the receiver. In some embodiments, content can be downloaded on a back channel before the sampling activities are complete (e.g. before the song is finished).

## Description

### BACKGROUND OF THE INVENTION

The invention relates generally to systems and methods (collectively the "system") for distributing media content. More specifically, the system allows users to purchase a content unit remotely while or after sampling the content unit.

The fate of a potential transaction will sometimes depend on timing. The interest of a particular consumer in a particular product can be fleeting. By making it easier to engage in a transaction, more transactions can be consummated. The sampling of a product such as media content, can be a useful way to stimulate desire for the product.

### SUMMARY OF THE INVENTION

The invention relates generally to systems and methods (collectively the "system") for distributing media content. More specifically, the system allows users to purchase a content unit remotely while or after sampling the content unit.

A content subsystem can be used to store a content unit, making it available to the system. A communication subsystem can provide users with the ability to sample a content unit, either by accessing a communication or by accessing a temporary storage device. A transaction subsystem can be used to receive and accept offers to purchase or rent the content unit. A transmission subsystem can then be used to send a copy of the desired content unit to the player device in accordance with the terms of the offer, or in some embodiments, without any limits whatsoever.

The system can be more fully understood upon reading the following detailed description in conjunction with the accompanying drawings.

### BRIEF DESCRIPTION OF THE DRAWINGS

Figure 1 is a block diagram illustrating some examples of elements that can be included in the system for distributing media content.
Figure 2 is a block diagram illustrating an example of a subsystem-level view of the system.
Figure 3 is a flow chart diagram illustrating an example of a process to distribute a content unit.
Figure 4 is a flow chart diagram illustrating an example of a process to distribute a content unit.
Figure 5 is a detailed flow chart diagram illustrating an example of a process for purchasing media content.
Figure 6 is a detailed flow chart diagram illustrating an example of a process for purchasing media content that involves a PIN.

### DESCRIPTION OF THE PREFERRED EMBODIMENTS

### I. OVERVIEW

The invention relates generally to systems and methods (collectively the "system") for distributing a media content unit.

The system facilitates the distribution of media content units by allowing users to purchase a desired content unit during the sampling of the content by the user, or after the sampling of the content by the user.

For example, a user listening to a song on a satellite radio receiver can use the system to purchase a copy of the song in real-time. In some embodiments, the song can be purchased and downloaded to a memory component accessible by the receiver before the song has finished playing on the receiver.

### II. INTRODUCTION OF ELEMENTS

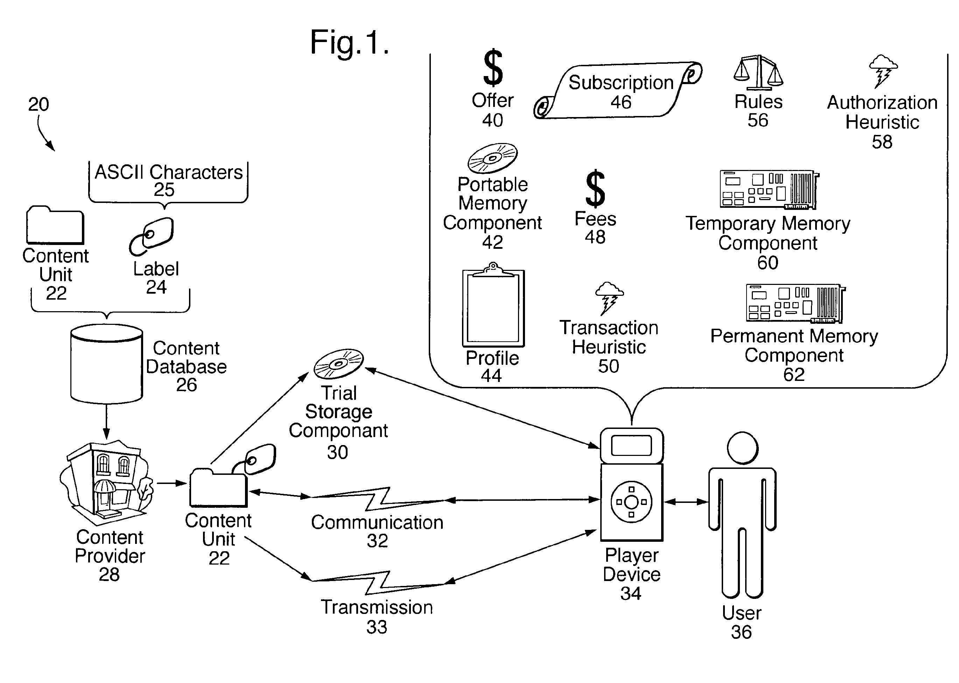

Figure 1 is a block diagram illustrating some examples of elements that can be included in a system 20 for distributing a media content unit 22. A wide range of different technological components and devices and can be used to perform the functionality of the system. The example if Figure 1 is merely one category of system embodiments.

### a) Content Units

A content unit 22 is a unit of content that is played or otherwise accessed on the host device, such as a player device 34. In an embodiment of the system 20 in which music is played, a content unit 22 is typically an individual song. In other embodiments of the system 20, a content unit 22 could be an entire album, a portion of an individual song, a movie, a scene within a movie, a video game, a particular section within a video game, or any other unit of content capable of being played on the player device 34. In some embodiments, the scope of the content unit 22 can be defined by a user 36. For example, an individual user 36 could "break down" a song into several sections, with each section constituting a distinct content unit 22. Industrial applications, as well as music and video files can be content units 22 processed by the system 20.

In some embodiments of the system 20, the content unit 22 can relate to an industrial application that is not for use in a consumer device.

### b) Labels

A label 24 is metadata or any information that is associated with a content unit 22. A label 24 is often a digital label that is embedded into a content unit 22. In the example of a music playing device, the label 24 can potentially include the name of the song, the name of the artist, the name of the album, the year that the song or album was published, the producer of the album, and virtually any other information relating to the content unit 22. Different types of content units 22 can involve different types of information being included within a label 24. For example, in a movie playing context, the label 24 could include information about the director and/or actors, and in a videogame playing context, the label 24 could include a current score. The types of information that can be incorporated into a label 24 are potentially limitless. A content provider 28 or some other entity involved in distributing the content unit 22 will often be the decision maker with respect to what types of information should be included within labels 24 for a particular embodiment of the system 20. In some embodiments, the user 36 through the use of a user profile 44 can influence the contents of the label 24 that are accessible by the player 34.

### c) Characters

The information in a label 24 is often embodied in a string of ASCII characters 25. A single label 22 can include a potentially limitless number of characters, although a display component of the player 34 will often have a finite display capacity. In some embodiments of the system 20, only alphanumeric characters can be included in a label 24.

### d) Content Database

A database 26 of content, which can also be referred to as a content database 26, can be used by system 20 to store content units 22, labels 24, and associations between units 22 and labels 24. The content units 22 and labels 24 stored in one or more content databases 26 used by the system 20 can be made accessible to a user 36 in many different ways using many different types of technologies. The content units 22 and labels 24 within the content database 26 can be distributed in a variety of different ways, some of which are identified below.

The system 20 can include a wide variety of different content databases 26 operated and controlled by one or more content providers 28. Each content provider 28 can use one or more servers to host the various content databases 26 for content units 22 associated with the content provider 28.

### e) Content Providers

The system 20 can be used to distribute content units 22 from one or more content providers 28. Content providers 28 can also be referred to as providers 28. Some content providers 28 may focus on a single type of content unit 22 such as music, while others may be involved in many different types of content units 22.

Content providers 28 can also distribute content units 22 in a wide variety of different ways using a wide variety of different technologies. As illustrated in the Figure, content units 22 are associated with labels 24 before the content units 22 are distributed to users 36. Content units 22 are typically distributed from a server, although the system 20 can incorporate and accommodate a wide range of different architectures. Similarly, a wide range of different communication devices can be used to provide "samples" of content units 22 (collectively "sampling") to users 36. A common example of a communication device is a satellite radio broadcast, in which a song is played on the radio. The system 20 can allow a listener of the broadcast to purchase a song while it is being played on the radio.

There are typically two categories of mechanisms for making content units 22 accessible to users 36, storage devices and communications. A temporary storage component (e.g. a "trial storage component") 30 can be used to make one or more content units 22 accessible to the user 22 for a limited number of uses. A communication 32, such as a satellite radio broadcast, can also make content units 22 accessible to users 36 in a controlled manner. If content units 22 are made accessible to users in an unrestricted manner, users 36 will often have less incentive to subsequently purchase a copy of the content unit 22.

### 1. Trial Storage Components

One category of distribution techniques is the use of a storage component 30 that is distributed to users 36. For example, music content units 22 can be distributed in the form of cassette tapes, records, CDs, DVDs, MP3 files, etc. Any mechanism capable of storing a content unit 22 can constitute a storage component 30. It is anticipated that new and improved storage components 30 will be created in the future, and that the system 20 will incorporate such advances. Trial storage components 30 will often be configured to limit the time that content units 22 can be accessed, or the number of times that content units 22 can be accessed.

### 2. Communications

Another category of distribution techniques involves the transmission of a content unit 22 from a remote source using a communication 32. For example, music content units 22 can be transmitted to users 36 via satellite radio communications 32. A communication 32 can include any technology or process for exchanging information between a source device and a recipient device. Radio, satellite radio, broadcast television, cable television, computer networks, and the Internet are common examples of communications 32. It is anticipated that new and improved communications 32 will be created in the future, and that the system 20 will incorporate such advances.

Communications 32 can be received by the player 34 as well as sent by the player 34. For example, if a user 36 makes an offer 40 to purchase one or more content units 22, that offer 40 can be sent to a server operated by or on behalf of the content provider 28 via a communication 32.

### 3. Transmissions

Communications 32 are the means by which samples of content units 22 are provided to players 34 and the means by which players 34 send offers 40 to content providers 28. A transmission 33 is the means by which unrestricted and permanent content units 22 can be sent to the player 34. The difference in terminology relates to the function being accomplished, and not the technological process, device, or architecture used to achieve the function.

### f) Player Device

A player device 34 is any device capable of "playing" the content unit 22. The variety of player devices 34 is commensurate to the variety of different types of content units 22. Player devices 34 can also be referred to as players 34. Many players 34 can also be referred to as media players 34.

Players 34 can be general purpose computers, as well as numerous devices that are not general purpose computers. Examples of players 34 can include radios, satellite radios, CD players, DVD players, PDAs, cell phones, portable music players, laptop computers, desktop computers, and a variety of other portable and stationary devices. Many players 34 are wireless devices.

The system 20 is not limited to player devices 34 or even to consumer devices. Industrial devices can also incorporate the processing of the system 20.

### 1. Offer

An offer 40 is a transaction request that originates from the user 36 through interactions with the player 34. For example, the player 20 could be configured to provide an interface that allows the user 36 to submit an offer 40 to the system 20. Offers 40 can also be referred to as "purchase requests." Different embodiments of the system 20 can provide for a wide range of information that can be associated with the offer 40. In many embodiments, the financial terms of the purchase are defined by a predefined subscription 46.

In some embodiments, the offer 40 is not limited to the current content unit 22 being sampled. In some embodiments, the offer 40 can include a personal identification number (PIN) supplied by a user 36 that relates to a subscription 46 between the user 36 and the entity operating the system 20 or the content provider 28.

### 2. Portable Memory Component

A portable memory component 42 can be used to store a copy of the content unit 22 purchased using the player 34. This allows the copy of the content unit 22 to be moved to a different player 34.

### 3. Profiles

A profile 44 is a bundle of information stored within the player 34 that relates to user preferences for a particular user 36 or a particular group of users 36. For example, a profile 46 could include information relating to speed preferences for or historical speed attributes of a particular user 36. Much of the information in a particular profile 44 can relate to the subscription 46 associated with the user 36.

Profiles 46 can influence which content units 22 made accessible to the user 36, as well as the ways content units 22 are organized within the player 34. For example, one user 36 might prefer classical music while another user 36 prefers jazz. One user 36 might prefer to listen to music at a relatively quiet volume while another user 36 might prefer a substantially louder volume.

The profile 46 associated with a particular user 36 can determine how transactions are initiated and consummated. Different users 36 may have different preferences relating to authentication and payment methodology.

### 4. Subscription

A subscription 46 is an agreement between the operator of the system 20 and a user 36. The subscription 46 can influence what content units 22 can be purchase, the fees associated with the purchase of content units 22, and potentially any attribute relating to a potential transaction for a content unit 22 or the ability to sample content units 22.

### 5. Fees

A wide range of fees 48 can be associated with access to the system 20 for sampling purposes, access to the system 20 for the purposes of purchasing copies of content units 22, and for purchasing rights to a copy of a particular content unit 22. Fees 48 can include a subscription fees providing access to the system 20 for a particular period of time as well as per-content unit fees for the purchase of a particular copy. Different content units 22 can be priced differently.

### 6. Transaction Heuristic

A transaction heuristic 50 is any process or methodology that can be used by the system 20 to facilitate the purchase of a copy of a content unit 22. There are a wide variety of different authorization heuristics, payment heuristics, information exchange heuristics, and delivery heuristics.

### 7. Rules

A rule 56 is a processing rule of the system 20 that cannot be altered by users 36. Processing rules 56 constrain the possible options available to users 36 in creating profiles 44 and customizing the processing of the system 20. In some embodiments of the system 20, there are no user profiles 44.

### 8. Authorization Heuristic

An authorization heuristic 58 is any process used by the system 20 to authenticate the identity of the user 36 and the ability of the user 36 to purchase copies of content units 22. Some authorization heuristics 58 will rely on a personal identification number (PIN). Other authorization heuristics 58 may utilize biometric information. In some embodiments, the player 34 can be configured so that no authorization heuristics 58 are invoked and that any person with custody of the player 34 can purchase content units 22.

### 9. Temporary Memory Component

In some embodiments of the system 20, a content unit 22 is temporarily stored in a temporary memory component 60 while it is being sampled or played by a user 36.

### 10. Permanent Memory Component

A permanent memory component 62 is a mechanism in or accessible by the player 34 that can be used to permanently store a copy of a content unit 22 that has been purchased using the system 20. In some embodiments of the system, the delivery of a purchased content unit 22 involves simply the moving of the content unit from the temporary memory component 60 to the permanent memory component 62.

### g) Users

A user 36 is typically a human being, although animals and machines can also potentially be users 36. Users 36 are often the beneficiaries and/or recipients of the content units 22 played on the player 34. In other embodiments, users 36 are merely the operators of the device (such as in industrial embodiments) embodying the system 20.

### III. SUBSYSTEM VIEWS

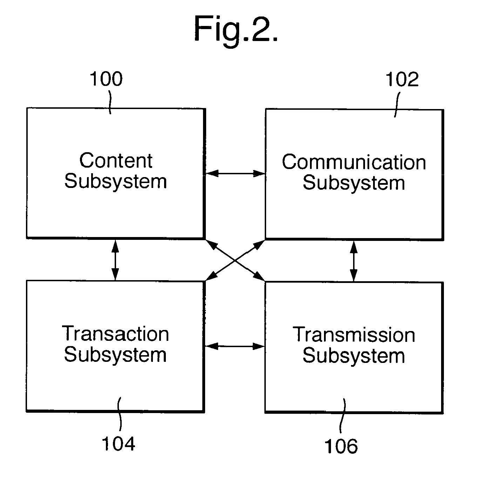

Figure 2 is a block diagram illustrating an example of a subsystem-level view of a system 20. As indicated by the arrows originating from and pointing towards the various subsystems, each subsystem can interact and communicate with any other subsystem.

### a) Content Subsystem

A content subsystem 100 is the subsystem by which content units 22 and labels 24 are stored and accessed by the system 20. The content subsystem 100 can include means for delivering and sampling content units 22, such as communications 32, transmissions 33, and trial storage components 30.

### b) Communication Subsystem

A communication subsystem 102 is responsible for communications 132 between users 36 (interacting with players 34) and content providers 28. The communication subsystem 102 allows for players 34 to access or sample content units 22. In some embodiments, the communication subsystem 102 can allow the player 34 to access the content unit 22 remotely, such as from the broadcast of a satellite radio station. In other embodiments, the sample resides in a portable memory component that constricts the use of the content unit 22.

### c) Transaction Subsystem

A transaction subsystem 104 is responsible for configuring and creating potential offers 40, accepting offers 40, and consummating transactions for copies of content units 22. The transaction subsystem 104 can provide for the sale, rent, rent-to-own, or any other type of transaction. The transaction subsystem 104 can also govern the payment attributes relating to the transaction.

The transaction subsystem 104 can include a subscription module for processing subscription information relevant to the particular transaction. User profiles 44 can also be relevant to the processing of a particular transaction.

### d) Transmission Subsystem

A transmission subsystem 106 is responsible for transmissions 33 of content units 22 to players 34. A wide variety of technological architectures, methodologies, and components can be used to deliver content units 22. In some embodiments, the transmission subsystem 106 can create and enforce use limitations in a content unit 22. For example, the rights of the user 36 could be limited to a certain number of "plays" or be limited to a specific length of time.

### IV. PROCESS FLOW VIEWS

### a) Example 1

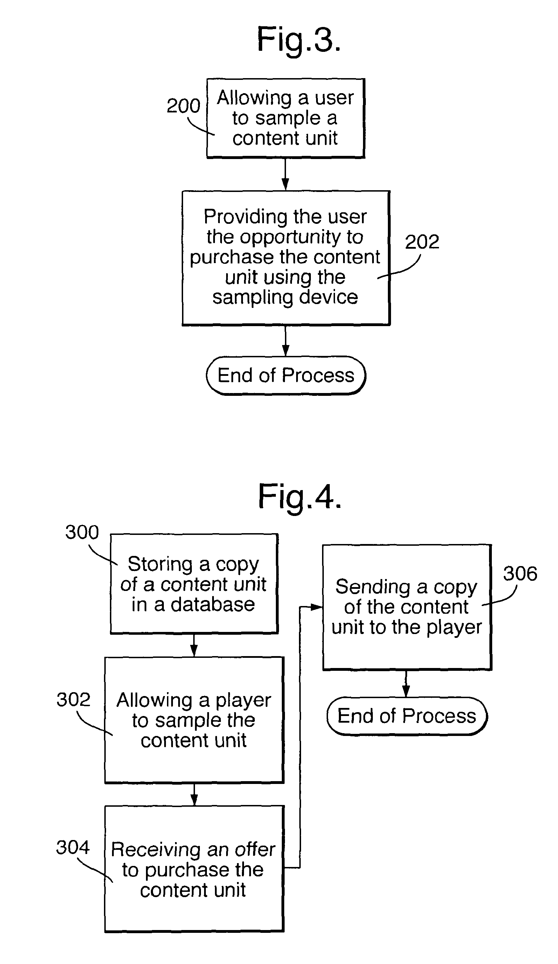

Figure 3 is a flow chart diagram illustrating an example of a process to allow sampling users 36 to purchase the sampled content unit 22.

At 200, a user 36 is provided the opportunity to sample a content unit 22.

At 202, the user 36 is provided the opportunity to use the player 34 to engage in a transaction for the content unit 22 that goes beyond the limits of the sample.

The process then terminates.

### b) Example 2

Figure 4 is a flow chart diagram illustrating an example of a process to allow sampling users 36 to purchase the sampled content unit 22.

At 300, a copy of a content unit 22 is stored in a content database 26.

At 302, a player 34 is allowed to sample the content unit 22.

At 304, an offer 40 for a transaction relating to the sampled content unit 22 is received from the player 34.

At 306, a copy of the content unit 22 is sent to the player 34.

The process then terminates.

### c) Example 3

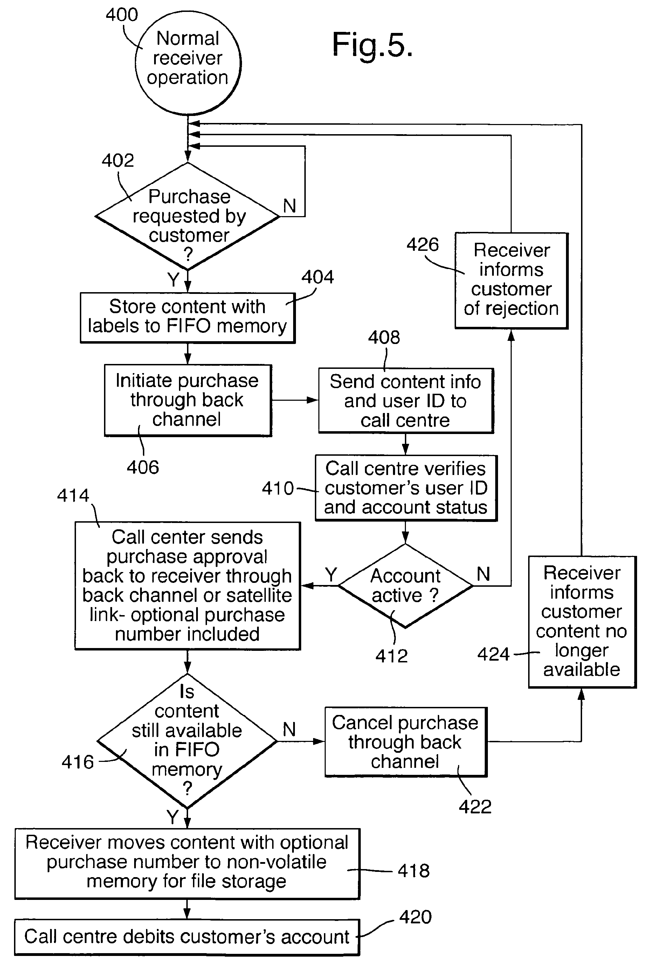

Figure 5 is a detailed flow chart diagram illustrating an example of a process for purchasing media content. The player 34 in Figure 5 is a satellite radio receiver.

At 400, the receiver is in a state of normal operations.

At 402, the system 20 determines whether or not a purchase has been requested (e.g. whether or not an offer 40 has been sent) by the user 36. If not, the system 20 returns to 400. If an offer 40 has been sent, then the content unit 22 with the associated label 24 is placed at 494 into a first-in-first-out (FIFO) memory unit.

At 406, the transaction is initiated through a back channel.

At 408, content unit 22 information, the label 24, and a user ID can be sent to a call center 408 to process the transaction.

At 410, the call center can authenticate the user 36 and the user's account status. If no active account is indicated at 412, the receiver informs the customer of an offer rejection at 426 and then the system 20 resumes to normal operations at 400.

If an active account is indicated at 412, the call center at 414 sends purchase approval back to the receiver through a back channel or satellite link. An optional purchase number can be included for accounting and verification purposes.

At 416, the system 20 determines whether the content unit 22 is still available in FIFO memory. If it is not available, the proposed transaction is cancelled through the back channel at 422 and the user 36 is informed of the unavailability at 424 before the system 20 returns to a normal operating mode at 400.

If the content unit 22 is available in FIFO, the receiver at 418 can move the content unit 22 from the temporary memory component 60 to the permanent memory component 62.

At 420, the call center can then debit the user's account with the system 20. The system 20 then returns to normal operation at 400.

### d) Example 4

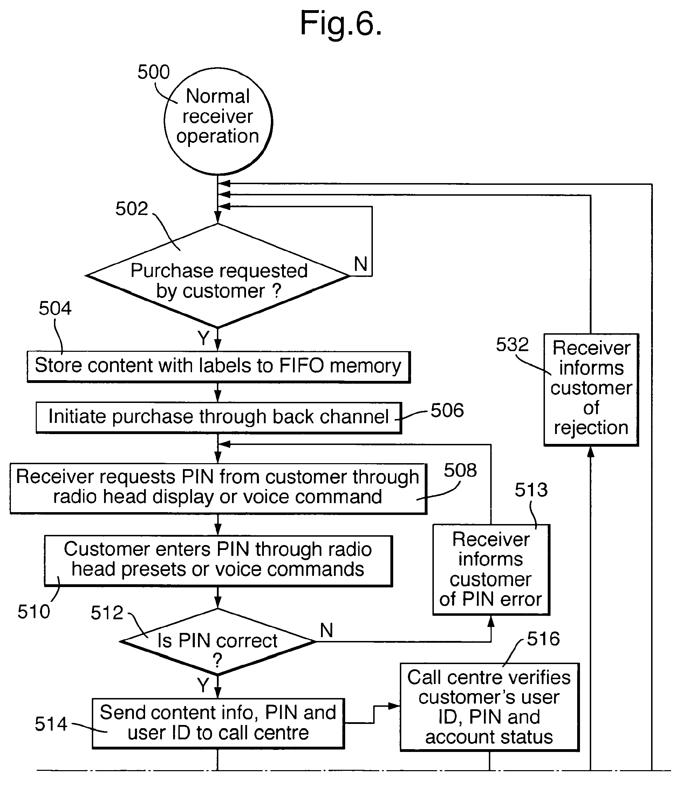

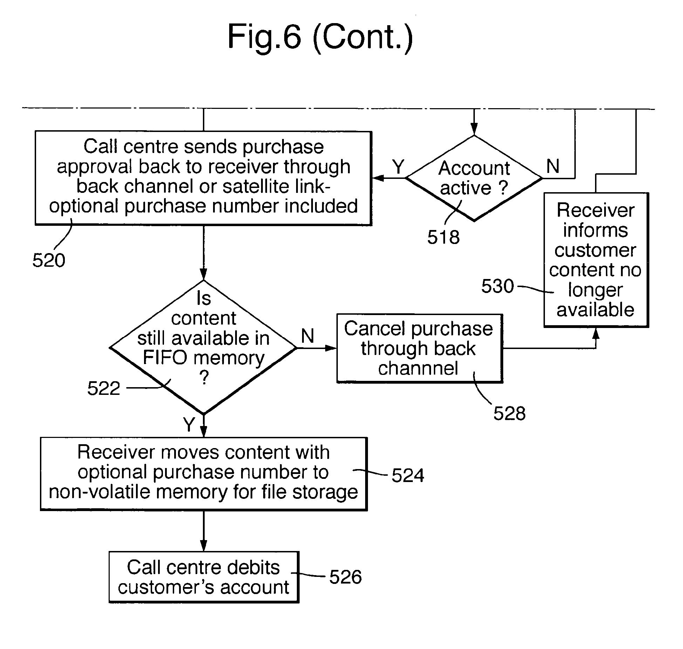

Figure 6 is a detailed flow chart diagram illustrating an example of a process for purchasing media content that involves a PIN. The player 34 in Figure 6 is a satellite radio receiver.

At 500, the receiver is in a normal operating state.

At 502, the system 20 determines whether or not an offer 40 has been made by a user 36. If no offer 40 is detected, the system 20 resumes a normal operating state at 500.

If an offer 40 is detected, the content unit 22 and label 24 are stored in a FIFO memory component at 504. A transaction can be initiated at 506 through a back channel.

At 508, the receiver requests a PIN from the user 36 through the radio head display, by voice command, or through some other process.

At 510, the user 36 provides the PIN through radio head presets, voice commands, or through some other process.

At 512, the system 20 determines whether or not the PIN is correct. If not, the receiver at 513 informs the user 36 of the incorrect PIN and requests the correct PIN at 508.

If the PIN is correct, content unit 22 information and labels 24 can be sent to the call center at 514 along with the User ID and the PIN. At 516, the applicable information can be used by the call center to verify information in accordance with the processing rules 56 for the particular transaction and the particular user 36 account.

At 518, the system 20 determines whether or not the applicable account is active, and is otherwise able to consummate the transaction. If the account cannot process the transaction, then the receiver at 532 informs the user 36 of the rejection at 532 before the system 20 returns to a normal operating state at 500.

If the account at 518 is able to process the transaction, then the call center sends the applicable purchase approval back to the receiver through a back channel or satellite link. A purchase number can also be included in some embodiments of the system 20.

At 520, the system 20 determines whether the content unit 22 is still available in FIFO memory. If it is not available, the proposed transaction is cancelled through the back channel at 528 and the user 36 is informed of the unavailability at 530 before the system 20 returns to a normal operating mode at 500.

If the content unit 22 is available in FIFO, the receiver at 524 can move the content unit 22 from the temporary memory component 60 to the permanent memory component 62.

At 5260, the call center can then debit the user's account with the system 20. The system 20 then returns to normal operation at 500.

### V. ALTERNATIVE EMBODIMENTS

In accordance with the provisions of the patent statutes, the principles and modes of operation of this invention have been explained and illustrated in preferred embodiments. However, it must be understood that this invention may be practiced otherwise than is specifically explained and illustrated without departing from its spirit or scope.

## Claims

1. A system for allowing users to purchase media content, comprising:
a content subsystem (100), wherein said content subsystem (100) provides for a content unit (22);
a communication subsystem (102), wherein said communication subsystem (102) provides for allowing a player device (34) to access said content unit (22);
a transaction subsystem (104), wherein said transaction subsystem (104) provides for receiving an offer to purchase a copy of said content unit (22) from said player device (34);
a transmission subsystem (106), wherein said transmission subsystem (106) provides for transmitting said copy of said content unit (22) to said player device (34).

2. The system of claim 1, wherein said communication subsystem (102) provides for allowing said player device (34) to remotely access said content unit (22).

3. The system of claim 1, wherein said content unit (22) resides in a portable memory component accessible by said player device (34).

4. The system of claim 1, wherein said player device (34) is not a general purpose computer.

5. The system of claim 1, wherein said content unit (22) is at least one of a music file and a video file.

6. The system of claim 1, wherein said communication subsystem (102) and said transmission subsystem (106) include at least one of: (a) a satellite radio distribution component and (b) a cable distribution component.

7. The system of claim 1, said content unit (22) is not limited by a predefined number of play times.

8. The system of claim 1, further comprising a subscription module (46), wherein said subscription module (46) provides a PIN, a subscription fee (48), and a per-content unit fee.

9. A system for facilitating the sale of media content, comprising:
a server, said server providing for:
a content database (26), said content database (26) providing for a plurality of content units (22);
a purchase request (402);
a transmission (106), including at least on said content unit (22) influenced by said purchased request;
a communication device (102), said communication device (102) providing for making at least one said content unit (22) accessible by a player (34), wherein said purchase request (402) received by said server relates to said content unit (22) made accessible by said player (34).

10. The system of claim 9, wherein said player (34) is a satellite radio receiver.

11. The system of claim 9, wherein said communication device (102) is remote from said server.

12. A method for distributing media content, comprising:
storing (300) a copy of a content unit (22) in a database (26);
allowing (302) a player (34) to sample the content unit (22) using a communication or a temporary storage device (30);
receiving (304) an offer to purchase the content unit (22), wherein the offer is received from the player (34); and
sending (306) a copy of the content unit (22) to the player (34).

13. The method of claim 12, wherein the player (34) is a wireless device.

14. The method of claim 12, wherein the content unit (22) is a song.

15. The method of claim 12, wherein the offer to purchase include a PIN.

16. The method of claim 12, wherein the player (34) is a cell phone.

17. The method of claim 12, wherein sending a copy of the content unit (22) to the player (34) includes moving the copy of the content unit (22) from a temporary memory (60) component within the player (34) to a permanent memory component (62) within the player (34).

18. The method of claim 12, wherein a plurality of content units (22) are available for transmission from a plurality of content databases (26) operated by a plurality of entities.

19. The method of claim 12, further comprising comparing a user input to a profile by invoking an authorization heuristic (58).

20. The method of claim 12, wherein the copy of the content unit (22) is sent while the copy is being sampled.
